(19) Europäisches Patentamt

European Patent Office

Office européen des brevets

(11) **EP 4 571 368 A1**

(12) **EUROPEAN PATENT APPLICATION**

(43) Date of publication:
**18.06.2025 Bulletin 2025/25**

(21) Application number: **24218922.3**

(22) Date of filing: **11.12.2024**

(51) International Patent Classification (IPC):
*G01V 8/10* (2006.01)      *G01V 8/00* (2006.01)

(52) Cooperative Patent Classification (CPC):
**G01V 8/005; G01V 8/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.12.2023 CN 202311695600**

(71) Applicants:
• **Tsinghua University**
  **Haidian District,**
  **Beijing 100084 (CN)**
• **NUCTECH COMPANY LIMITED**
  **Beijing 100084 (CN)**
• **Shenmutek Company Limited**
  **101312 Beijing (CN)**

(72) Inventors:
• **ZHAO, Ziran**
  **Beijing, 100084 (CN)**
• **YOU, Yan**
  **Beijing, 100084 (CN)**
• **JIN, Yingkang**
  **Beijing, 100084 (CN)**
• **GENG, Xingjie**
  **Beijing, 100084 (CN)**
• **FENG, Huacheng**
  **Beijing, 100084 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **TERAHERTZ SIGNAL-BASED IMAGE COLLECTION DEVICE, IMAGE GENERATION SYSTEM AND IMAGE GENERATION METHOD**

(57)     A terahertz signal-based image collection device, an image generation system and an image generation method are provided. The image collection device includes: a swinging reflection plate configured to reflect terahertz wave signals emitted from a sampling region including a target to be inspected; a lens component configured to focus the terahertz wave signals reflected by the swinging reflection plate; and a radiometer array including n rows of radiometers mounted on a focal plane of the lens component, where the n rows of radiometers are configured to sample the terahertz wave signals emitted from the same height of the target to be inspected and reflected by the swinging reflection plate at intervals, where n ≥ 2, so that the formed terahertz wave image has higher resolution and higher contrast.

FIG. 1

## Description

TECHNICAL FIELD

At least one embodiment of the present disclosure relates to an image collection device, and in particular to a terahertz signal-based image collection device, an image generation system and an image generation method.

BACKGROUND

Since the terahertz wave has an ability of penetrating different materials (such as clinker, clothing, etc.), terahertz wave passive imaging technology has broad potential applications in scenarios such as security inspections at important customs such as airports, scene monitoring.

In theory, any object will constantly radiate electromagnetic waves outward. Passive terahertz wave focal plane imaging technology uses a focusing antenna combined with a high-sensitivity radiometer to receive power of terahertz waves radiated from the scenarios. According to differences in radiation power intensity between different preset suspicious objects and the target to be inspected, imaging is achieved, so as to determine whether there are suspicious objects in the target to be inspected.

When the terahertz wave passive imaging system is applied to security inspection imaging, the target to be inspected is located in a near-field region of the receiving antenna (focusing antenna) in the terahertz signal-based image collection device. In this case, in order to improve imaging speed, it is often required to dispose a plurality of radiometers on a focal plane of the lens component in the image collection device to form a focal plane array.

In order to reduce system costs and complexity, the current related solution is to provide a row of radiometer array on the focal plane of the lens component, and to scan and image an entire viewing field of a sampling region where the target to be inspected is located through mechanical scanning method combined with a swinging reflection plate. However, this structure of a row of radiometer array causes it difficult to achieve higher resolution in a case that a formed terahertz wave image has a higher contrast.

SUMMARY

In order to solve the above technical problems, embodiments of the present disclosure provide a terahertz signal-based image collection device, an image generation system, and an image generation method, so that a formed terahertz wave image has higher resolution and higher contrast.

As a first aspect of the present disclosure, there is provided a terahertz signal-based image collection device, including:

a swinging reflection plate configured to reflect terahertz wave signals emitted from a sampling region including a target to be inspected;

a lens component configured to focus the terahertz wave signals reflected by the swinging reflection plate; and

a radiometer array including n rows of radiometers mounted on a focal plane of the lens component, where the n rows of radiometers are configured to sample the terahertz wave signals emitted at the same height of the target to be inspected and reflected by the swinging reflection plate at intervals, where $n \geq 2$.

According to embodiments of the present disclosure, the n rows of radiometers are configured to uniformly sample at the same intervals.

According to embodiments of the present disclosure, a receiving surface of a receiving antenna in an $(i+1)^{th}$ row of radiometers among the n rows of radiometers is staggered by $\dfrac{Q}{n}$ relative to a receiving surface of a receiving antenna in an $i^{th}$ row of radiometers among the n rows of radiometers in a row direction, where $1 \leq i \leq n-1$, and Q is a length of the receiving surface of the receiving antenna of a radiometer in the row direction.

According to embodiments of the present disclosure, a sampling frequency of the radiometer array is 2 to 3 times an Nyquist sampling frequency.

According to embodiments of the present disclosure, n is 3 or 4.

According to embodiments of the present disclosure, a dimension of the receiving surface of the receiving antenna of each radiometer is configured such that - 10dB to -13dB beam width of the receiving antenna is equal to an aperture angle of the lens component to the receiving antenna.

According to embodiments of the present disclosure, the swinging reflection plate is configured to swing around a rotation shaft, so that the swinging reflection plate reflects terahertz waves from different heights of a region to be inspected.

According to embodiments of the present disclosure, the rotation shaft of the swinging reflection plate extends horizontally parallel to the region to be inspected; and
an extension direction of each row of radiometers is parallel to an extension direction of the rotation shaft.

According to embodiments of the present disclosure, the receiving antenna of each radiometer includes:

a tapered portion having a trumpet shape with a gradually increasing cross-section towards the lens component in a receiving direction, where a side of the tapered portion facing the lens component forms the receiving surface; and

a waveguide portion disposed at a side of the tapered portion opposite to the receiving surface, so as to transmit the terahertz wave signals received by the tapered portion from the lens component.

According to embodiments of the present disclosure, a number of radiometers in each row satisfies a condition:

$$H \div E = P \times Q$$

where H represents a width of the sampling region, E represents a magnification of the lens component, P represents a number of radiometers in a row, and Q represents a length of the receiving surface of the receiving antenna in the row direction.

According to embodiments of the present disclosure, the image collection device further includes: a guidance component configured to guide the target to be inspected to the sampling region of the radiometer array.

According to embodiments of the present disclosure, as a second aspect of the present disclosure, there is further provided an image generation system including:

the above-mentioned image collection device; and

an image generation device configured to construct a terahertz wave image of the target to be inspected based on the terahertz wave signals received by the radiometer array.

According to embodiments of the present disclosure, the image generation device includes:

an imaging module configured to perform imaging on collection data collected by a $j^{th}$ row of the radiometer array to obtain a $j^{th}$ sub-image, where $1 \leq j \leq n$; and

a processing module configured to obtain the terahertz wave image of the target to be inspected according to all sub-images.

According to embodiments of the present disclosure, the processing module includes:

a registration module configured to align feature parts of n sub-images to obtain n registration sub-images; and

a fusion module configured to use an $m^{th}$ column of pixels of a $j^{th}$ registration sub-image among the n registration sub-images as an $(j + n(m - 1))^{th}$ column of pixels of the terahertz wave image of the target to be inspected, so as to obtain the terahertz wave image of the target to be inspected.

According to embodiments of the present disclosure, the registration module is further configured to delete pixel rows that are not inspected by all radiometers in the n registration sub-images after obtaining the n registration sub-images.

As a third aspect of the present disclosure, there is also provided a terahertz signal-based image generation method, including:

collecting terahertz wave signals emitted from a region to be inspected including a target to be inspected using the above-mentioned image collection device;

performing imaging on collection data collected by a $j^{th}$ row of the radiometer array to obtain a $j^{th}$ sub-image, where $1 \leq j \leq n$; and

obtaining a terahertz wave image of the target to be inspected according to all sub-images.

According to embodiments of the present disclosure, obtaining the terahertz wave image of the target to be inspected according to all sub-images includes:

aligning feature parts of the target to be inspected in n sub-images to obtain n registration sub-images; and

implementing an $m^{th}$ column of pixels in the n registration sub-images as an $(j + n(m - 1))^{th}$ column of pixels of the terahertz wave image of the target to be inspected, so as to obtain the terahertz wave image of the target to be inspected.

According to embodiments of the present disclosure, after obtaining the n registration sub-images, pixel rows that are not inspected by all radiometers in the n registration sub-images are deleted.

According to embodiments of the present disclosure, the n rows of radiometers are used for sampling, and the n rows of radiometers are configured to sample the terahertz wave signals emitted from the same height of the target to be inspected and reflected by the swinging reflection plate at intervals. Compared to an array structure of one row of radiometers, the sampling rate may be increased. Therefore, the resolution of the terahertz wave image obtained through sampling data of the n rows of radiometers in the embodiments of the present disclosure is better, which may simultaneously meet the requirements of resolution and contrast.

BRIEF DESCRIPTION OF THE DRAWINGS

FIG. 1 shows a schematic diagram of a principle of a terahertz signal-based image collection device provided according to embodiments of the present disclosure;

FIG. 2 shows a schematic diagram of a comparison between Rayleigh sampling and Nyquist sampling;

FIG. 3 shows a schematic diagram of an arrangement of receiving antennas of a row of radiometers in a radiometer array provided according to embodiments of the present disclosure;

FIG. 4 shows a three-dimensional view of a receiving antenna of the radiometer in FIG. 3;

FIG. 5A shows a top view of a radiometer array formed by two rows of radiometers provided according to an embodiment of the present disclosure;

FIG. 5B shows a top view of a radiometer array formed by two rows of radiometers provided according to another embodiment of the present disclosure;

FIG. 6A shows a top view of a radiometer array formed by three rows of radiometers provided according to an embodiment of the present disclosure;

FIG. 6B shows a top view of a radiometer array formed by three rows of radiometers provided according to another embodiment of the present disclosure;

FIG. 7A shows a top view of a radiometer array formed by four rows of radiometers provided according to an embodiment of the present disclosure;

FIG. 7B shows a top view of a radiometer array formed by four rows of radiometers provided according to another embodiment of the present disclosure;

FIG. 8 shows a schematic diagram of a process of generating a sub-image provided according to embodiments of the present disclosure;

FIG. 9A shows a diagram of a comparison of a plurality of sub-images generated by the image generation system for the same target to be inspected provided according to embodiments of the present disclosure;

FIG. 9B shows a diagram of a comparison of a plurality of registration sub-images after registering the plurality of sub-images shown in FIG. 9A according to embodiments of the present disclosure; and

FIG. 9C shows an image obtained by fusing the plurality of registration sub-images shown in FIG. 9B.

Description for reference numbers:

1: Image collection device;

11: Swinging reflection plate;

12: Lens component;

13: Radiometer array;
131: Radiometer;

1311: Receiving antenna;

1311-1: Tapered portion;

1311-2: Waveguide portion;

14 Rotation shaft;

2: Region to be inspected;

3: Target to be inspected.

DETAILED DESCRIPTION OF EMBODIMENTS

Hereinafter, embodiments of the present disclosure will be described with reference to the accompanying drawings. However, it should be understood that these descriptions are merely exemplary and not intended to limit the scope of the present disclosure. In the following detailed description, for ease of explanation, many specific details are elaborated to provide a comprehensive understanding of embodiments of the present disclosure. However, it is apparent that one or more embodiments may also be implemented without these specific details. Furthermore, in the following description, descriptions of well-known structures and techniques have been omitted to avoid unnecessary confusion of concepts of the present disclosure.

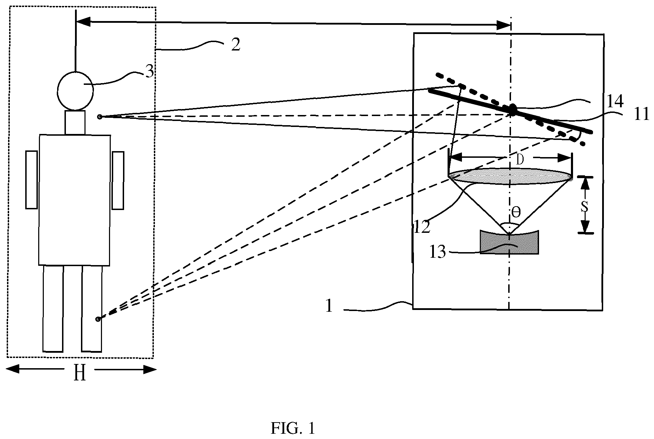

FIG. 1 shows a schematic diagram of a principle of a terahertz signal-based image collection device provided according to embodiments of the present disclosure.

With reference to FIG. 1, FIG. 5A, FIG. 5B, FIG. 6A, FIG. 6B, FIG. 7A, and FIG. 7B, the terahertz signal-based image collection device 1 includes a swinging reflection plate 11, a lens component 12, and a radiometer array 13.

The swinging reflection plate 11 is used to reflect terahertz wave signals emitted from a sampling region including a target to be inspected 3. The lens component 12 is used to focus the terahertz wave signals reflected by the swinging reflection plate 11. The radiometer array 13 includes n rows of radiometers 131 mounted on a focal plane of the lens component 12. The n rows of radiometers 131 are configured to sample the terahertz wave signals emitted from the same height of the target to be inspected 3 and reflected by the swinging reflection plate 11 at intervals, where n ≥ 2.

According to embodiments of the present disclosure, the n rows of radiometer 131 are used to sample, and the n rows of radiometers 131 are configured to sample the terahertz wave signals emitted from the same height of the target to be inspected 3 and reflected by the swinging reflection plate 11 at intervals. Compared to an array structure of only one row of radiometers 131, the sampling rate may be increased. Therefore, the resolution of the terahertz wave image obtained through sampling data of the n rows of radiometers 131 in the embodiments of the present disclosure is better, which may simultaneously meet the requirements of resolution and contrast.

According to embodiments of the present disclosure, the swinging reflection plate 11 is configured to swing around a rotation shaft 14, so that the swinging reflection plate 11 reflects terahertz waves from different heights of a region to be inspected 2. The rotation shaft 14 of the swinging reflection plate 11 extends horizontally parallel to the region to be inspected 2, and an extension direction of each row of radiometers 131 is parallel to an extension direction of the rotation shaft 14, so that each row of radiometers 131 samples for a horizontal direction of the region to be inspected 2.

In order to better understand the technical solution of embodiments of the present disclosure, the following describes defects in aspects of meeting the requirements of contrast while meeting the requirements of resolution when performing sampling using the array structure of a row of radiometers 131.

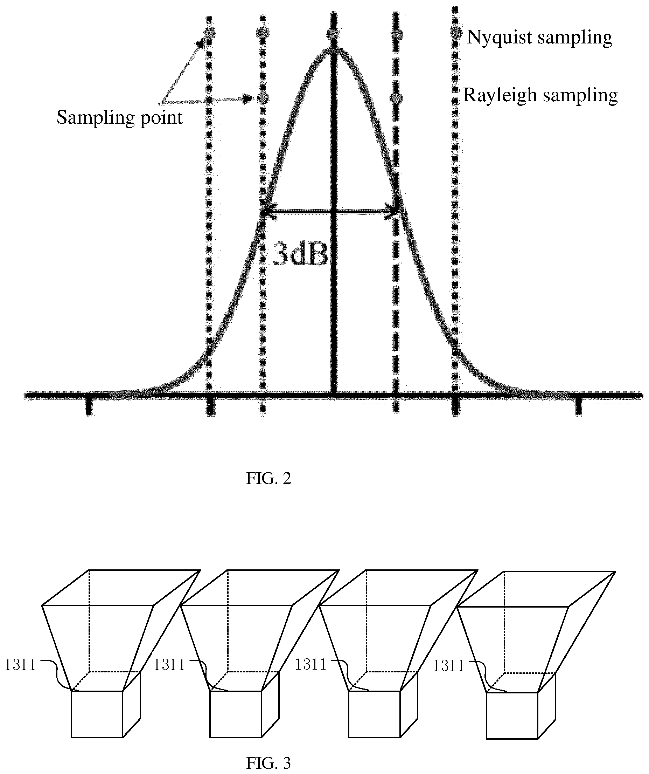

FIG. 2 shows a schematic diagram of a comparison between Rayleigh sampling and Nyquist sampling.

As shown in FIG. 2, the spatial Nyquist sampling theorem describes that each -10 dB to -13dB beam width (i.e. half-power beam width) requires at least two sampling points to fully record position information of the target to be inspected 3. If there is only one sampling point within every -10dB to -13dB beam width, it is Rayleigh sampling. When performing imaging on the collected terahertz wave signals, Nyquist sampling requires at least two sampling points, but a sampling frequency may not meet an Nyquist sampling frequency. Therefore, if conditions permit, the sampling frequency should be increased as much as possible to achieve sampling of the at least two sampling points, thereby improving the image quality of terahertz wave signals.

With continued reference to FIG. 1, in the case where only one row of radiometers are included in the radiometer array 13 of the image collection device 1, it is assumed that a diameter of the lens is D and a distance between the lens and the receiving surface of the receiving antenna 1311 of the radiometer 13 is S, according to Rayleigh criterion, a half-power spot diameter σ of the lens is:

$$\sigma \approx \frac{1.22\lambda S}{D} \quad (1)$$

where λ is a wavelength of the terahertz wave signal.

An aperture angle of the receiving antenna 1311 of the radiometer towards the lens is:

$$\theta = \frac{D}{S} \quad (2)$$

According to antenna theory, an aperture of the receiving antenna 1311 is d, and an estimation equation for -10dB to -13dB power beam width $\theta_{3dB}$ of the receiving antenna 1311 is:

$$\theta_{3dB} \approx \frac{1.22\lambda}{d} \quad (3)$$

It is assumed that the number of sampling times for each spot is w, then there is:

$$w = \frac{\sigma}{d} \quad (4)$$

According to equations (1) to (4), in order to achieve high contrast in the image formed by the collected terahertz wave signal, the image collection device requires to overflow less energy and have a higher overflow efficiency. That is, more terahertz waves enter the receiving antenna 1311 from the lens component 12. The -10 to -13dB beam angle width $\theta_{3dB}$ of the receiving antenna 1311 should be the same as the aperture angle θ of the receiving antenna 1311 towards the lens. However, in this case, w = 1, the number of Rayleigh sampling times is 1, and the sampling rate of Rayleigh sampling is low. Therefore, the resolution of the image formed by the terahertz wave signal is low and the imaging effect is poor. If Nyquist sampling is satisfied, that is, w=2, then $\theta_{3dB}$=2θ. In this case, the sampling rate is high, but the system overflow efficiency is low, resulting in low contrast of the formed terahertz wave image.

From another perspective, in an image collection device including a one-dimensional linear radiometer array, a half-power beam angle of the receiving antenna 1311 is inversely proportional to the aperture d of the receiving antenna 1311. The higher the contrast of the formed terahertz wave image, the larger the aperture d of the receiving antenna 1311 is required. Since the receiving antenna 1311 is arranged in the focal plane of the lens component 12, the larger the aperture d of the receiving antenna 1311, the fewer receiving antennas 1311 may be arranged on the focal plane, and the lower the resolution of the formed terahertz wave image. This is a contradiction between the contrast and the resolution that occurs when using a row of radiometers 131 to collect the terahertz wave signals.

According to embodiments of the present disclosure, the n rows of radiometers 131 are configured to uniformly sample at the same intervals for the same height of the target to be inspected 3, that is, uniformly sample at intervals with the same lengths in the row direction. The uniformly sampling of the n rows of radiometers 131 may reduce distortion during the imaging process, capture features of the target to be inspected 3 more comprehensively, and cause details of the formed image clearer, to make the formed image have a higher resolution.

Any row of radiometers 131 in the radiometer array 13 are arranged linearly, so that the receiving antennas 1311 of any row of radiometers 131 are arranged linearly.

FIG. 3 shows a schematic diagram of an arrangement of receiving antennas of a row of radiometers in a radiometer array provided according to embodiments of the present disclosure.

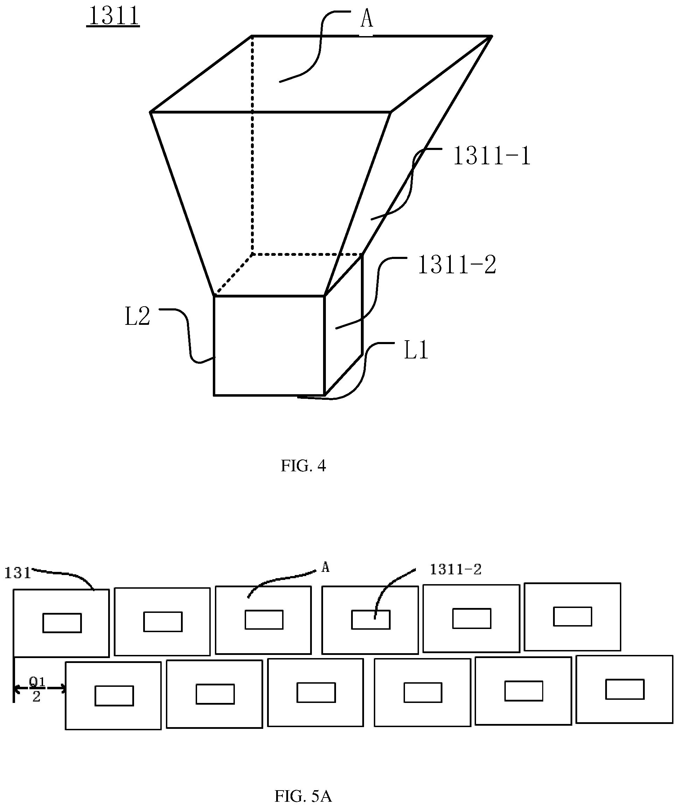

FIG. 4 shows a three-dimensional view of a receiving antenna of a radiometer in FIG. 3.

As shown in FIG. 3 and FIG. 4, the receiving antenna 1311 of the radiometer includes a tapered portion 1311-1 and a waveguide portion 1311-2. The tapered portion 1311-1 has a trumpet shape with a gradually increasing cross-section towards the lens component 12 in a receiving direction, and a side of the tapered portion 1311-1 facing the lens component 12 forms the receiving surface A. The waveguide portion 1311-2 is, for example, in a shape of cuboid and disposed at a side of the tapered portion 1311-1 opposite to the receiving surface A, so as to transmit the terahertz wave signals received by the tapered portion 1311-1 from the lens component 12.

According to embodiments of the present disclosure, a cross-section of the waveguide portion 1311-2 of the receiving antenna is a standard waveguide. The standard waveguide includes a circular waveguide or a rectangular waveguide. In a field of terahertz imaging, a standard rectangular waveguide is preferred. The standard rectangular waveguide may be, for example, W waveguide, D waveguide, and G waveguide. A dimension of the W waveguide is 2.54mm * 1.27mm, a dimension of the D waveguide is 1.651mm * 0.8255mm, and a dimension of the W waveguide is 1.0922mm * 0.5461mm. A dimension of the cross-section of the standard rectangular waveguide is in a form of 2:1 (a length of the rectangular waveguide L1: a width of the rectangular waveguide L2 = 2:1). The bands of the three waveguides such as W waveguide, D waveguide, and G waveguide are also the main working bands in the field of terahertz security inspection. The dimension of the receiving surface A of the receiving antenna 1311 of the radiometer 131 in the row direction is within a range of 5mm to 50mm.

According to embodiments of the present disclosure, the receiving surface A of the receiving antenna in an $(i+1)^{th}$ row of radiometers among the n rows of radiometers is staggered by $\dfrac{Q}{n}$ relative to the receiving surface A of the receiving antenna 1311 in an $i^{th}$ row of radiometers 131 in a row direction, so that the n rows of radiometers may perform uniform sampling at the same intervals, where $1 \le i \le n-1$, and Q is a length of the receiving surface A of the receiving antenna 1311 of the radiometer 131 in the row direction. In some embodiments, the length of the receiving surface A in the row direction may be a length Q1 of the receiving surface A or a width Q2 of the receiving surface A.

FIG. 5A shows a top view of a radiometer array formed by two rows of radiometers provided according to an embodiment of the present disclosure.

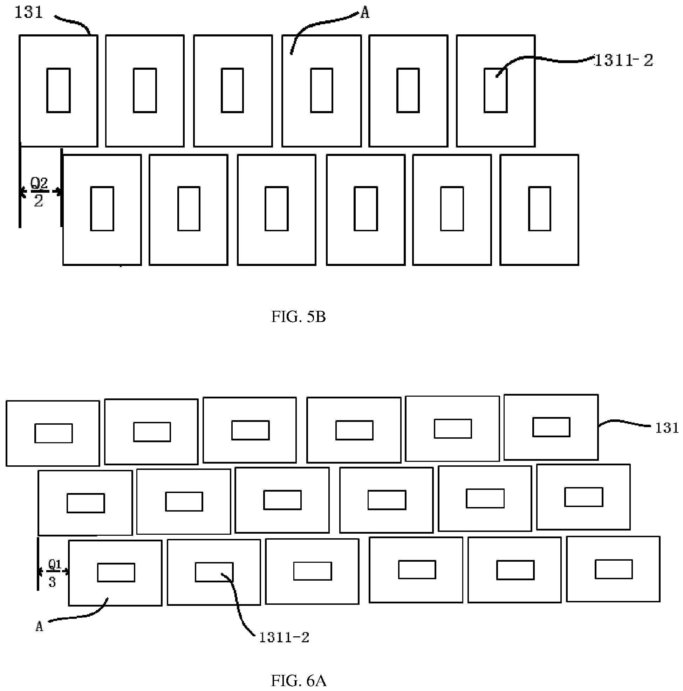

FIG. 5B shows a top view of a radiometer array formed by two rows of radiometers provided according to another embodiment of the present disclosure.

As shown in FIG. 5A to FIG. 5B, when only two rows of radiometers 131 are included in the radiometer array 13, the receiving surface A of the receiving antenna 1311 in a second row of radiometers 131 is staggered by $\dfrac{Q}{2}$ relative to the receiving surface A of the receiving antenna 1311 in a first row of radiometers 131 in the row direction. In FIG. 5A, the length of the receiving surface A of the receiving antenna 1311 of a single radiometer 131 in the row direction is equal to the length Q1 of the receiving surface A of the receiving antenna 1311. In FIG. 5B, the length of the receiving surface A of the receiving antenna 1311 of a single radiometer 131 in the row direction is equal to the width Q2 of the receiving surface A of the receiving antenna 1311.

FIG. 6A shows a top view of a radiometer array formed by three rows of radiometers provided according to an embodiment of the present disclosure.

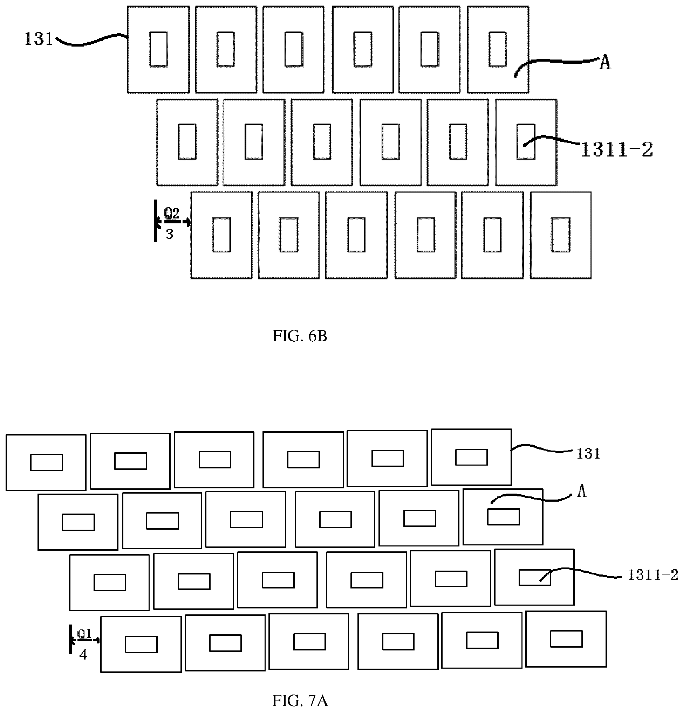

FIG. 6B shows a top view of a radiometer array formed by three rows of radiometers provided according to another embodiment of the present disclosure.

As shown in FIG. 6A to FIG. 6B, when only three rows of radiometers 131 are included in the radiometer array 13, the receiving surface A of the receiving antenna 1311 in a second row of radiometers 131 is staggered by $\dfrac{Q}{3}$ relative to the receiving surface A of the receiving antenna 1311 in a first row of radiometers 131 in the row direction, and the receiving surface A of the receiving antenna 1311 of a third row of radiometers 131 is staggered by $\dfrac{Q}{3}$ relative to the receiving surface A of the receiving antenna 1311 in the second row of radiometers 131 in the row direction. In FIG. 6A, the length of the receiving surface A of the receiving antenna 1311 of a single radiometer 131 in the row direction is equal to the length Q1 of the receiving surface A of the receiving antenna 1311. In FIG. 6B, the length of the receiving surface A of the receiving antenna 1311 of a single radiometer 131 in the row direction is equal to the width Q2 of the receiving surface A of the receiving antenna 1311.

FIG. 7A shows a top view of a radiometer array formed by four rows of radiometers provided according to an embodiment of the present disclosure.

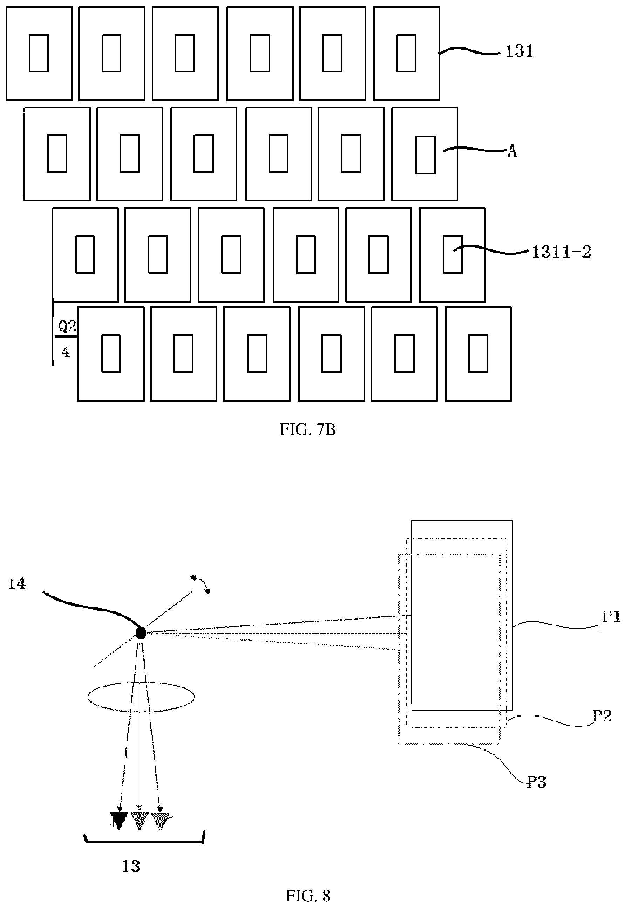

FIG. 7B shows a top view of a radiometer array formed by four rows of radiometers provided according to another embodiment of the present disclosure.

As shown in FIG. 7A to FIG. 7B, when only four rows of radiometers 131 are included in the radiometer array 13, the receiving surface A of the receiving antenna 1311 in a second row of radiometers 131 is staggered by $\frac{Q}{4}$ relative to the receiving surface A of the receiving antenna 1311 in a first row of radiometers 131 in the row direction. The receiving surface A of the receiving antenna 1311 in a third row of radiometers 131 is staggered by $\frac{Q}{4}$ relative to the receiving surface A of the receiving antenna 1311 in the second row of radiometers 131 in the row direction. The receiving surface A of the receiving antenna 1311 in the second row of radiometers 131 is staggered by $\frac{Q}{4}$ relative to the receiving surface A of the receiving antenna 1311 in the first row of radiometers 131 in the row direction. In FIG. 7A, the length of the receiving surface A of the receiving antenna 1311 of a single radiometer 131 in the row direction is equal to the length Q1 of the receiving surface A of the receiving antenna 1311. In FIG. 7B, the length of the receiving surface A of the receiving antenna 1311 of a single radiometer 131 in the row direction is equal to the width Q2 of the receiving surface A of the receiving antenna 1311.

According to embodiments of the present disclosure, the lens component 12 may be, for example, a lens or a lens group including a plurality of lenses.

With continued reference to FIG. 1, the dimension of the receiving surface of the receiving antenna of each radiometer is configured such that -10dB to -13dB beam width $\theta_{3dB}$ of the receiving antenna 1311 is equal to the aperture angle $\theta$ of the lens component 12 to the receiving antenna. In a case that the -10dB to -13dB beam width $\theta_{3dB}$ of the receiving antenna 1311 is equal to the aperture angle $\theta$ of the lens component 12 to the receiving antenna, the contrast of the image formed by the collected terahertz wave signals is high.

Considering costs of the radiometer 131, it is possible to balance image signal-to-noise ratio and costs in a case that a sampling frequency is 2 to 3 times an Nyquist sampling frequency. For example, the number of rows in the radiometer array 13 is 3 to 4.

With continued reference to FIG. 1, according to embodiments of the present disclosure, the number of radiometers 131 in each row satisfies:

$$H \div E = P \times Q \quad (5)$$

where H represents the width of the sampling region, E represents the magnification of the lens component, P represents the number of radiometers in a row, and Q represents the length of the receiving surface of the receiving antenna in the row direction. The number of radiometers 131 in each row may be determined according to a width of the actual sampling region and a width of the sampling region. For example, the number of radiometers 131 in each row may be 6, 7, 8, or 9.

According to embodiments of the present disclosure, the image collection device 1 further includes a guidance component (not shown in the figure) used to guide the target to be inspected 3 to the sampling region of the radiometer array 13. The guidance component includes an indicator or a sign to guide the target to be inspected 3 to move to the sampling region. Alternatively, the guidance component may include an automatic conveying device to automatically convey the target to be inspected 3 to the sampling region. Alternatively, the guidance component may include a voice prompt component, a photography component, or a display component. The position of the target to be inspected 3 is obtained by the photography component, and related operators recognize the position of the target to be inspected 3 on the display component and prompt the target to be inspected 3 to move to the sampling region through the voice prompt component.

According to embodiments of the present disclosure, there is also provided an image generation system including the image collection device 1 and an image generation device (not shown in the figure). The image generation device is configured to construct a terahertz wave image of the target to be inspected 3 based on the terahertz wave signals received by the radiometer array 13. The image generation device includes an imaging module and a processing module. The imaging module is configured to perform imaging on collection data collected by a $j^{th}$ row of the radiometer array 13 to obtain a $j^{th}$ sub-image, where $1 \leq j \leq n$, so that n sub-images are generated based on the radiometer array 13 including n rows of radiometers. The processing module is configured to obtain the terahertz wave image of the target to be inspected 3 according to all sub-images. According to embodiments of the present disclosure, the processing module includes a registration module and a fusion module. The registration module is configured to align feature parts of the n sub-images generated by the imaging module, so as to obtain n registration sub-images. The fusion module is configured to use an $m^{th}$ column of pixels of a $j^{th}$ registration sub-image among the n registration sub-images as an $(j + n(m - 1))^{th}$ column of pixels of the terahertz wave image of the target to be inspected 3, so as to obtain the terahertz wave image of the target to be inspected 3.

According to embodiments of the present disclosure, the registration module is further configured to delete pixel rows that are not detected by all radiometers in the n registration sub-images after obtaining the n registration sub-images (which will be described in detail below).

As a third aspect of the present disclosure, there is also provided a terahertz signal-based image generation method, including operation S110 to operation S130.

In operation S110, the image collection device 1 is used to collect terahertz wave signals emitted from a region to be inspected 2 including a target to be inspected 3.

In operation S120, imaging is performed on collection data collected by a $j^{th}$ row of the radiometer array 13 to obtain a $j^{th}$ sub-image, where $1 \leq j \leq n$, so that n sub-images are generated based on the radiometer array 13 including n rows of radiometers.

In operation S130, a terahertz wave image of the target to be inspected 3 is obtained according to all sub-images.

According to embodiments of the present disclosure, obtaining the terahertz wave image of the target to be inspected 3 according to all sub-images includes operation S131 to operation S132.

In operation S131, feature parts of the target to be inspected in the n sub-images are aligned to obtain n registration sub-images.

Since positions of each row of radiometers 131 among the n rows of radiometers 131 in the focal plane are different, sampling heights of different rows of radiometers 131 are different, the position of the target to be inspected 3 in each sub-image may be different slightly. Therefore, it is needed to align the feature parts of the target to be inspected 3 in the n sub-images, so that pixel rows in which the feature parts of the target to be inspected 3 in each registration sub-image are located are the same.

In operation S132, an $m^{th}$ column of pixels in the n registration sub-images are implemented as an $(j + n(m - 1))^{th}$ column of pixels of the terahertz wave image of the target to be inspected 3, so as to obtain the terahertz wave image of the target to be inspected 3.

After aligning the feature parts of the target to be inspected in the n sub-images, since the radiometer array 13 may achieve uniformly sampling for the same height of the target to be inspected 3 at the same intervals, the $m^{th}$ column of pixels of the $j^{th}$ registration sub-image may be used as the $(j + n(m - 1))^{th}$ column of pixels of the terahertz wave image of the target to be inspected, so as to obtain the terahertz wave image of the target to be inspected 3.

According to embodiments of the present disclosure, after obtaining the n registration sub-images, pixel rows that are not inspected by all radiometers in the n registration sub-images are deleted. For example, an $X^{th}$ row of pixels in the $j^{th}$ registration sub-image are not inspected by all radiometers in the $j^{th}$ row. Therefore, the resolution of the $X^{th}$ row of pixels is low and needs to be deleted. In this case, for other registration sub-images, the pixel rows corresponding to the $X^{th}$ row of pixels in the $j^{th}$ registration sub-image also require to be deleted.

FIG. 8 shows a schematic diagram of a process of generating a sub-image provided according to embodiments of the present disclosure.

As shown in FIG. 8, for example, if the device has three rows of radiometers, the radiometer array 13 is arranged in an arrangement form of 3 * 6, and each row has six radiometers. In order to achieve complete sampling of the target to be inspected 3, the swinging reflection plate 11 scans once (such as from the highest position to the lowest position or from the lowest position to the highest position), and each row of radiometers collect R rows of data, and R is generally greater than 1000. After completing data collection of the sampling region, three sub-images P1, P2, and P3 are formed.

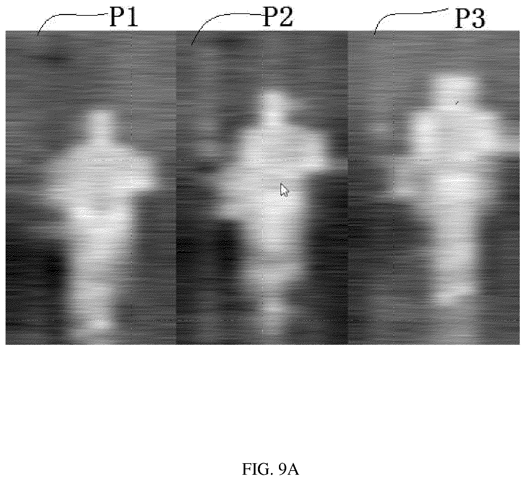

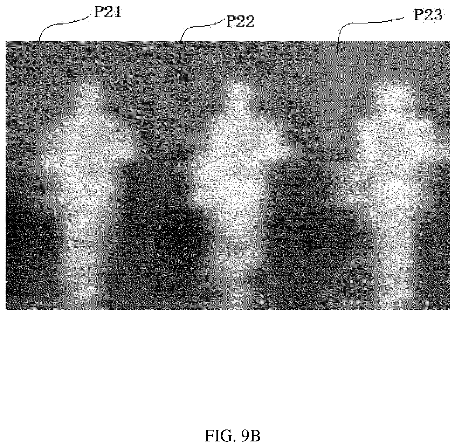

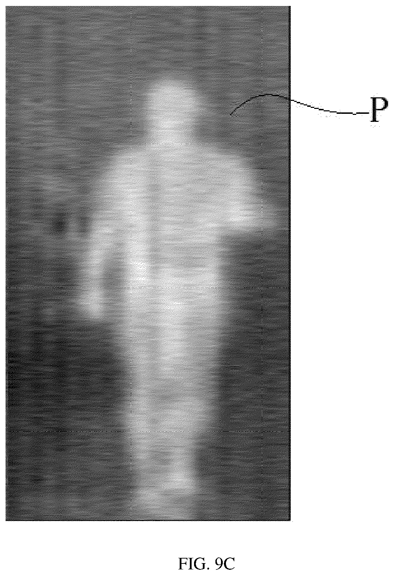

Taking the radiometer array including three rows of radiometers as an example, combined with FIG. 9A to FIG.9C, the process of obtaining the terahertz wave image of the target to be inspected 3 will be explained. FIG. 9A shows a diagram of a comparison of a plurality of sub-images generated by the image generation system for the same target to be inspected provided according to embodiments of the present disclosure. FIG. 9B shows a diagram of a comparison of a plurality of registration sub-images after registering the plurality of sub-images shown in FIG. 9A according to embodiments of the present disclosure. FIG. 9C shows an image obtained by fusing the plurality of registration sub-images shown in FIG. 9B.

As shown in FIG. 9A, three sub-images P1, P2, and P3 are included in FIG. 9A, and the target to be inspected 3 in the three sub-images may be, for example, a person. It may be seen from FIG. 9A that the positions of the target to be inspected in respective sub-images are different. Therefore, it is needed to first align the feature parts of the target to be inspected to obtain three registration sub-images, so as to ensure that the heights of the target to be inspected in the three sub-images are the same.

As shown in FIG. 9B, for the registration sub-images P11, P21, and P31, the image formed for the same height of the target to be inspected 3 corresponds to the same pixel row in the n registration sub-images. For example, for the image formed for the same height of the target to be inspected 3, the pixels in the n registration sub-images are in an $h^{th}$ row.

After fusing the three sub-images in FIG. 9B, the image P in FIG. 9C is obtained. Combined with the images in FIG. 9B and FIG. 9C, it may be seen that the resolution of the image P in FIG. 9C, especially in a horizontal direction, is significantly higher than the resolution of each image in FIG. 9A and FIG. 9B.

Since the image P in FIG. 9C is obtained by fusing the registration sub-images P11, P21, and P31 in FIG. 9B, that is, the number of pixels in the row direction of the image P in FIG. 9C is a sum of the number of pixels in the row direction of the registration sub-images P11, P21, and P31 in FIG. 9B, the resolution of the image P in FIG. 9C, especially in the horizontal direction, is significantly higher than the resolution of each sub-image in FIG. 9A and FIG. 9B.

The specific embodiments described above provide further detailed explanations of the purpose, technical solutions, and beneficial effects of the present disclosure. It should be understood that the above are only specific embodiments of the present disclosure and are not intended to limit the present disclosure. Any modifications, equivalent substitutions, improvements, etc. made within the spirit and principles of the present disclosure should be included in the scope of protection of the present disclosure.

**Claims**

1.  A terahertz signal-based image collection device (1), comprising:

    a swinging reflection plate (11) configured to reflect terahertz wave signals emitted from a sampling region comprising a target to be inspected (3);
    a lens component (12) configured to focus the terahertz wave signals reflected by the swinging reflection plate (11); and
    a radiometer array (13) comprising n rows of radiometers (131) mounted on a focal plane of the lens component (12), wherein the n rows of radiometers (131) are configured to sample the terahertz wave signals emitted from the same height of the target to be inspected (3) and reflected by the swinging reflection plate (11) at intervals, where $n \geq 2$.

2.  The image collection device (1) of claim 1, wherein the n rows of radiometers (131) are configured to uniformly sample at the same intervals.

3.  The image collection device (1) of claim 2, wherein a receiving surface (A) of a receiving antenna (1311) in an $(i+1)^{th}$ row of radiometers (131) among the n rows of radiometers (131) is staggered by $\frac{Q}{n}$ relative to a receiving surface (A) of a receiving antenna (1311) in an $i^{th}$ row of radiometers (131) among the n rows of radiometers (131) in a row direction, where $1 \leq i \leq n-1$, and Q is a length of the receiving surface (A) of the receiving antenna (1311) of a radiometer (131) in the row direction.

4.  The image collection device (1) of any one of claims 1 to 3, wherein a sampling frequency of the radiometer array (13) is 2 to 3 times an Nyquist sampling frequency.

5.  The image collection device (1) of any one of claims 1 to 3, where n is 3 or 4.

6.  The image collection device (1) of any one of claims 1 to 3, wherein a dimension of a receiving surface (A) of a receiving antenna (1311) of each radiometer (131) is configured such that -10dB to -13dB beam width of the receiving antenna (1311) is equal to an aperture angle of the lens component (12) to the receiving antenna (1311).

7.  The image collection device (1) of any one of claims 1 to 6, wherein the swinging reflection plate (11) is configured to swing around a rotation shaft (14), so that the swinging reflection plate (11) reflects terahertz waves from different heights of a region to be inspected (2).

8.  The image collection device (1) of claim 7, wherein the rotation shaft (14) of the swinging reflection plate (11) extends horizontally parallel to the region to be inspected (2); and
    an extension direction of each row of radiometers (131) is parallel to an extension direction of the rotation shaft (14).

9.  The image collection device (1) of any one of claims 1 to 8, wherein a receiving antenna (1311) of each radiometer (131) comprises:

    a tapered portion (1311-1) having a trumpet shape with a gradually increasing cross-section towards the lens component (12) in a receiving direction, wherein a side of the tapered portion (1311-1) facing the lens component (12) forms the receiving surface (A); and
    a waveguide portion (1311-2) disposed at a side of the tapered portion (1311-1) opposite to the receiving surface (A), so as to transmit terahertz wave signals received by the tapered portion (1311-1) from the lens component (12).

10. The image collection device (1) of any one of claims 1 to 9, wherein a number of radiometers (131) in each row satisfies:

$$H \div E = P \times Q$$

    where H represents a width of the sampling region, E represents a magnification of the lens component (12), P represents a number of radiometers (131) in a row, and Q represents a length of a receiving surface (A) of a receiving antenna (1311) in a row direction.

11. The image collection device (1) of any one of claims 1 to 10, further comprising:
    a guidance component configured to guide the target to be inspected (3) to the sampling region of the radiometer array (13).

12. An image generation system, comprising:

the image collection device (1) of any one of claims 1 to 11; and
an image generation device configured to construct a terahertz wave image of the target to be inspected (3) based on the terahertz wave signals received by the radiometer array (13).

13. The image generation system of claim 12, wherein the image generation device comprises:

an imaging module configured to perform imaging on collection data collected by a $j^{th}$ row of the radiometer array (13) to obtain a $j^{th}$ sub-image, where $1 \leq j \leq n$; and
a processing module configured to obtain the terahertz wave image of the target to be inspected (3) according to all sub-images,
wherein the processing module comprises:

a registration module configured to align feature parts of n sub-images to obtain n registration sub-images; and
a fusion module configured to use an $m^{th}$ column of pixels of a $j^{th}$ registration sub-image among the n registration sub-images as an $(j + n(m - 1))^{th}$ column of pixels of the terahertz wave image of the target to be inspected (3), so as to obtain the terahertz wave image of the target to be inspected (3),
wherein the registration module is further configured to delete pixel rows that are not inspected by all radiometers (131) in the n registration sub-images after obtaining the n registration sub-images.

14. A terahertz signal-based image generation method, comprising:

collecting terahertz wave signals emitted from a region to be inspected (2) comprising a target to be inspected (3) using the image collection device (1) of any one of claims 1 to 11;
performing imaging on collection data collected by a $j^{th}$ row of the radiometer array (13) to obtain a $j^{th}$ sub-image, where $1 \leq j \leq n$; and
obtaining a terahertz wave image of the target to be inspected (3) according to all sub-images.

15. The image generation method of claim 14, wherein obtaining the terahertz wave image of the target to be inspected (3) according to all sub-images comprises:

aligning feature parts of the target to be inspected (3) in n sub-images to obtain n registration sub-images; and
implementing an $m^{th}$ column of pixels in the n registration sub-images as an $(j + n(m - 1))^{th}$ column of pixels of the terahertz wave image of the target to be inspected (3), so as to obtain the terahertz wave image of the target to be inspected (3),
wherein after obtaining the n registration sub-images, pixel rows that are not inspected by all radiometers (131) in the n registration sub-images are deleted.

FIG. 1

FIG. 2

FIG. 3

FIG. 4

FIG. 5A

FIG. 5B

FIG. 6A

131

A

1311-2

$\dfrac{Q2}{3}$

FIG. 6B

131

A

1311-2

$\dfrac{Q1}{4}$

FIG. 7A

FIG. 7B

FIG. 8

FIG. 9A

FIG. 9B

FIG. 9C

**EP 4 571 368 A1**

Europäisches
Patentamt
European
Patent Office
Office européen
des brevets

# EUROPEAN SEARCH REPORT

Application Number

EP 24 21 8922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 110 806 590 A (INST ELECTRONICS CAS)<br>18 February 2020 (2020-02-18)<br>* paragraph [0001] *<br>* paragraph [0193] *<br>* paragraph [0012] - paragraph [0013] *<br>* paragraph [0015] *<br>* paragraph [0206] - paragraph [0208] *<br>* paragraph [0070] *<br>* paragraph [0075] *<br>* figure 3 * | 1,4-6,<br>10-15<br>2,3,7-9 | INV.<br>G01V8/10<br>G01V8/00 |
| X<br>A | CN 209 728 194 U (UNIV TSINGHUA; NUCTECH<br>CO LTD) 3 December 2019 (2019-12-03)<br>* paragraph [0005] - paragraph [0029] * | 1,4-6,<br>10-12,14<br>2,3,7-9,<br>13,15 | |
| X<br>A | US 2021/394366 A1 (CHEN ZHIQIANG [CN] ET<br>AL) 23 December 2021 (2021-12-23)<br>* paragraph [0035] - paragraph [0037] *<br>* paragraph [0014] - paragraph [0017] *<br>* paragraph [0037] *<br>* paragraph [0041] - paragraph [0043] *<br>* figures 9A-E,8,4,5 * | 1-12,14<br>13,15 | |

**TECHNICAL FIELDS SEARCHED (IPC)**

G01S
G01V

The present search report has been drawn up for all claims

| Place of search | Date of completion of the search | Examiner |
|---|---|---|
| The Hague | 28 April 2025 | Hippchen, Sabine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 8922

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2025

| Patent document cited in search report | | Publication date | Patent family member(s) | | Publication date |
|---|---|---|---|---|---|
| CN 110806590 | A | 18-02-2020 | NONE | | |
| CN 209728194 | U | 03-12-2019 | NONE | | |
| US 2021394366 | A1 | 23-12-2021 | CN | 113835135 A | 24-12-2021 |
| | | | US | 2021394366 A1 | 23-12-2021 |

EPO FORM P0459

For more details about this annex : see Official Journal of the European Patent Office, No. 12/82